# EUROPÄISCHE PATENTANMELDUNG

(11) **EP 0 529 277 A2**
(43) Veröffentlichungstag der Anmeldung: **03.03.1993**
(21) Anmeldenummer: 92112162.0
(22) Anmeldetag: 16.07.1992
(51) Int. Cl.: B23B 29/04

(54) **Werkzeughalter für Drehmaschinen**

(30) Priorität: 23.08.1991 DE 4128001
(71) Anmelder: Nagel, Peter, D-59909 Bestwig (DE)
(72) Erfinder: Nagel, Peter, D-59909 Bestwig (DE)
(74) Vertreter: Pürckhauer, Rolf, Dipl.-Ing.

(57) **Zusammenfassung**

Um ein Nachstellen durch Kippen des Werkzeughalters zu ermöglichen und die Schnittkräfte formschlüssig als Scherkräfte aufnehmen zu können, ist der Werkzeughalter (2), der an einem Grundkörper (3) sitzt, auf einer Welle (7) mit Hilfe eines Stellkeils (15) durch Kippen verstellbar. Die Welle (7) ist teils an einem Schlitten (1) der Drehmaschine und teils am Grundkörper (3) des Werkzeughalters (2) in entsprechenden Nuten mit dem Radius der Welle (7) gelagert, wobei Halteschrauben (4) durch Querbohrungen (6) der Welle (7) mit Spiel hindurchverlaufen und zwischen Schlitten (1) und Grundkörper (3) ein Spalt (S) vorgesehen ist.

## Beschreibung

Die Erfindung bezieht sich auf einen Werkzeughalter für Drehmaschinen, insbesondere Drehautomaten, wobei der Werkzeughalter an einem Schlitten befestigt ist.

Bei bekannten Drehmaschinen bzw. -automaten weist der Schlitten eine T-Nut zum Befestigen des Werkzeughalters auf. Die Befestigung des Werkzeughalters in einer T-Nut des Schlittens gestattet jedoch kein Kippen des Werkzeughalters, um z.B. Korrekturen beim Profildrehen vornehmen oder Ungenauigkeiten im Werkzeug- oder Schneidsystem ausgleichen zu können. Der Werkzeughalter wird über T-Stücke in der T-Nut des Schlittens, also lediglich kraftschlüssig, gehalten.

Der Erfindung liegt die Aufgabe zugrunde, einen Werkzeughalter der genannten Gattung so auszubilden und zu befestigen, daß ein Nachstellen durch leichtes Kippen desselben möglich ist und daß die Kräfte als Scherkräfte formschlüssig aufgenommen werden können.

Diese Aufgabe wird erfindungsgemäß durch die Kennzeichnungsmerkmale des Patentanspruchs 1 gelöst.

Den Unteransprüchen sind zweckmäßige Weiterbildungen der Erfindung zu entnehmen.

Der Schlitten der Drehmaschine benötigt keine T-Nut. Die Möglichkeit der Kippverstellung um die Welle, die über ihre Länge auf Scheren beansprucht wird, erlaubt auch neben Korrekturen und Ungenauigkeitsausgleichen ein Schrägstehen von beispielsweise 2° mit einem gerade geschliffenen Drehwerkzeug, das dann schräg eingestellt wird.

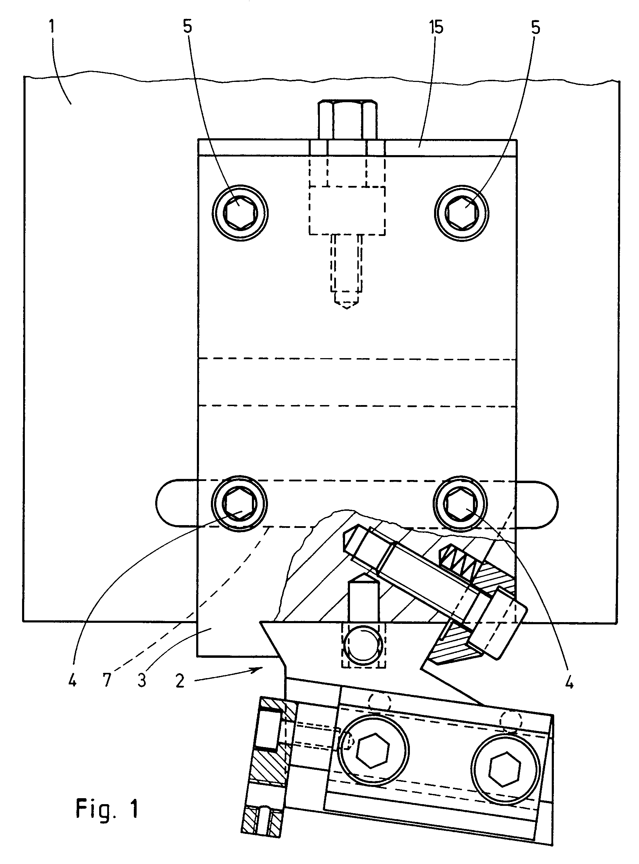

In der Zeichnung ist ein Ausführungsbeispiel der Erfindung dargestellt. Dabei zeigt
- Fig. 1: eine Seitenansicht des Werkzeughalters,
- Fig. 2: eine Draufsicht desselben und
- Fig. 3: einen Blick in Richtung des Pfeiles III in Fig. 2 in eine Aufnahmebohrung für eine Halteschraube des Werkzeughalters.

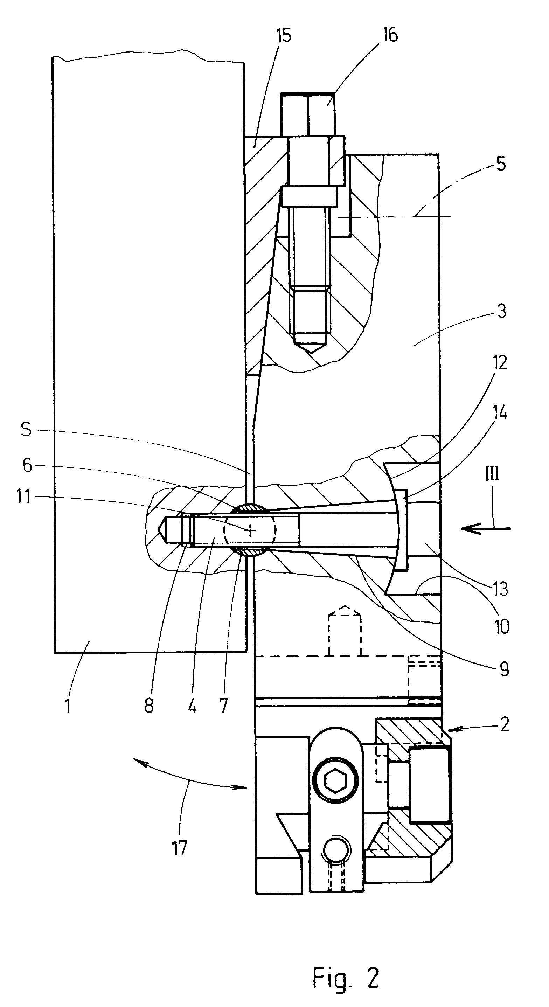

An einem Schlitten 1 ist ein Werkzeughalter 2 über einen Grundkörper 3 mit zwei vorderen Halteschrauben 4 und zwei hinteren Halteschrauben 5 befestigt. Die näher zum Werkzeughalter 2 gelegenen vorderen Halteschrauben 4 erstrecken sich mit Spiel durch Querbohrungen 6 in einer Welle 7 (siehe die teilweise aufgebrochene Draufsicht der Fig. 2) und sind in Gewindebohrungen 8 des Schlittens 1 eingeschraubt. Auch die hinteren Halteschrauben 5, deren Lage in Fig. 2 nur durch eine strichpunktierte Linie angedeutet ist, sind im Schlitten 1 verschraubt und haben im Grundkörper 3 etwas Spiel.

Die Welle 7 ist jeweils in einer dem Radius der Welle 7 entsprechenden Nut des Grundkörpers 3 einerseits und einer gleichen Nut im Schlitten 1 andererseits so gelagert, daß zwischen dem Schlitten 1 und dem Grundkörper 3 des Werkzeughalters 2 ein Spalt S verbleibt.

Wie in Fig. 2 dargestellt, ist für den Durchgang jeder Halteschraube 4 im Grundkörper 3 des Werkzeughalters 2 eine trichterförmig oval ausgebildete Bohrung 9 vorgesehen, die nach außen in ein Senkloch 10 mündet, das eine in einem Radius um die Mitte 11 der Welle 7 gekrümmte Anzugsfläche 12 aufweist (siehe auch Fig. 3, die einen Blick in das Senkloch 10 und die Bohrung 9 zeigt). Zwischen einem Schraubenkopf 13 der Halteschraube 4, die in Fig. 3 nicht dargestellt ist, und der Anzugsfläche 12 ist eine Formscheibe 14 vorgesehen, deren dem Schraubenkopf 13 abgewandte Fläche der Krümmung der Anzugsfläche 12 angepaßt ist.

Der Grundkörper 3 des Werkzeughalters 2 kann um wenige Grad um die Mitte 11 der Welle 7 mit Hilfe eines Stellkeils 15 und einer Stellschraube 16 gekippt werden (siehe Pfeile 17). Dazu werden die vorderen Halteschrauben 4 entsprechend gelockert, und auch die hinteren Halteschrauben 5 werden gelockert, wenn der Stellkeil 15 mit der Stellschraube 16 eingeschoben wird, und werden nachgedreht, wenn der Stellkeil 15 nach außen bewegt wird. Auf diese Weise kann der Werkzeughalter 2 gekippt werden, um beispielsweise schräge Flächen zu drehen oder Ungenauigkeiten im Schneidsystem auszugleichen. Die Schnittkräfte werden beim Drehen durch die Welle 7 als Scherkräfte aufgefangen, die auf die Länge der Welle 7 einwirken.

Der Erfindungsbereich wird auch dann nicht verlassen, wenn die Nut für die Lagerung der Welle 7 statt direkt im Schlitten 1 in einer am Schlitten 1 zu befestigenden separaten Platte (nicht dargestellt) vorgesehen wird.

## Patentansprüche

1. Werkzeughalter für Drehmaschinen, insbesondere Drehautomaten, wobei der Werkzeughalter an einem Schlitten befestigt ist, gekennzeichnet durch folgende Merkmale:
a) zwischen dem Schlitten (1) und einem Grundkörper (3) des Werkzeughalters (2) ist eine Welle (7) vorgesehen;
b) die Welle (7) ist jeweils in einer dem Radius der Welle (7) entsprechenden Nut des Schlittens (1) einerseits und des Grundkörpers (3) andererseits unter Beibehaltung eines Spaltes (S) zwischen Schlitten (1) und Grundkörper (3) gelagert und weist Querbohrungen (6) für den Durchgang von Halteschrauben (4) auf;
c) die Halteschrauben (4) sitzen jeweils in einer Gewindebohrung (8) des Schlittens (1) und verlaufen durch von der Welle (7) aus leicht trichterförmig nach außen oval erweiterte Bohrungen (9) im Grundkörper (3) des Werkzeughalters (2);
d) zwischen dem Schlitten (1) und dem Grundkörper (3) des Werkzeughalters (2) ist an dem dem Werkzeughalter (2) abgewandten Ende des Grundkörpers (3) ein Stellkeil (15) vorgesehen, der mit einer Stellschraube (16) betätigbar ist.

2. Werkzeughalter nach Anspruch 1, dadurch gekennzeichnet, daß die Schraubenköpfe (13) der Halteschrauben (4) für den Grundkörper (3) des Werkzeughalters (2) in Senklöchern (10) sitzen, die entsprechend der jeweiligen trichterförmig oval erweiterten Bohrung (9) ausgebildet sind und in einem Bogen um die Mitte (11) der Welle (7) gekrümmte Anzugsflächen (12) für den jeweiligen Schraubenkopf (13) aufweisen, und daß zwischen der jeweiligen Anzugsfläche (12) und dem Schraubenkopf (13) eine Formscheibe (14) vorgesehen ist.

3. Werkzeughalter nach Anspruch 1 oder 2, dadurch gekennzeichnet, daß die Halteschrauben (4) mit spiel in den Querbohrungen (6) der Welle (7) sitzen.
